# EUROPEAN PATENT APPLICATION

(11) **EP 0 561 609 A1**
(43) Date of publication of application: **22.09.1993**
(21) Application number: 93301975.4
(22) Date of filing: 16.03.1993
(51) Int. Cl.: B29D 30/30

(54) **Apparatus for aligning sheet material on a drum**

(30) Priority: 16.03.1992 JP 89344/92
(71) Applicant: BRIDGESTONE CORPORATION, Tokyo 104 (JP)
(72) Inventor: Ishii, Ryutaro, Higashimurayama-shi, Tokyo (JP)
(74) Representative: Silverman, Warren

(57) **Abstract**

An apparatus for providing a cut length of sheet material (1) to be wrapped around a cylindrical drum (2) and held thereon comprises a knife-edge support (8,9) for receiving a knife-edge of a cutter (6) for the sheet material, sheet member holding means (10,11) provided in said knife-edge support (8,9) for detachably securing an end portion (1a, 1b, 1c) of said sheet member on said knife-edge support (8,9), and knife-edge support moving means (14,15) for moving said knife-edge support (8,9) tangentially with respect to said drum in synchrony with rotation of said drum for transfer of said material to the drum to take place on release of said material from the knife-edge support (8,9).

## Description

This invention relates to an apparatus for aligning sheet material on a drum, in particular an apparatus for cutting continuous lengths of belting material, wrapping each cut length around a drum so that it adheres to the drum. More particularly, the invention relates to an apparatus by means of which a rubber sheet is cut to a predetermined length, the cut length is wrapped around a circumferential surface of a drum and the leading end of the cut length is bonded to the trailing end thereof. Apparatus of this invention is particularly intended for use in a tyre manufacturing process.

The above-mentioned type of apparatus is disclosed, for instance, in U.S. Patent No.5,100,489. This apparatus is illustrated in Figure 3 of the accompanying drawings and will be described briefly, as follows:

A sheet member 01, is conveyed by a conveyor 02, then it is cut to a predetermined length by a cutter 04 set above an countersupport 03 provided at the front end of the conveyor 02 to be wrapped around a shaping drum 05 positioned in front of the countersupport 03. The leading end and the trailing end of the cut length are bonded with each other.

A gripper 06 for gripping the end portion of the sheet member 01 cut by the cutter 04 and transferring the sheet member 01 onto the building drum 05, is provided separately.

The gripper 06 grips the sheet member 01 in such manner that an upper gripping body 08 presses the sheet member 01 against a lower gripping body 07 supporting the sheet member 01 from below to pinch the sheet member 01 therebetween. The gripper 06 moves while gripping the end portion of the sheet member 01 in the above-described manner to transfer it onto the shaping drum 05, and the end portions of the sheet member 01 are pressed against the shaping drum 04 by means of pressing bodies 09 and 010 before and behind the gripper 06.

When the sheet member 01 is to be cut into a series of portions, the gripper 06 is placed contiguously to the countersupport 03 to grip the sheet member 01 at its portion in front of the countersupport 03, and a rear portion of the sheet member 01 is separately pressed by means of another pressing body, body 011, to leave the sheet member 01 ready for cutting with the cutter 04.

With the heretofore known apparatus, since a gripper 06 is provided separately from a countersupport, then, when the rear end of the sheet member 01 wrapped around the shaping drum 05 is cut by the cutter 04 while being gripped by the gripper 06 placed contiguously to the countersupport 03 as described above, the cut end portion is present on the countersupport 03 and is not held gripped by the gripper 06. Hence the cut end tends to deform as it moves on as a free end, and it is difficult to maintain straightness or identity of this trailing end to the leading end.

Likewise, the leading end of the sheet member 01 which remains on the conveyor 02 also has to be inserted between the lower gripping body 07 and the upper gripping body 08. The leading end itself thus has to be free for gripping by the gripper 06. Therefore, there is also a fear that the leading end be deformed.

Since deformation of a cut end influences bonding precision, high bonding precision cannot be expected. In addition, use of the gripper 06 complicates the construction of the apparatus through the need to provide a moving mechanism for it. This increases significantly the overall equipment cost.

It is an object of the present invention to provide a sheet member handling apparatus in which, with use of a simple structure, bonding precision at ends can be maintained at a high level.

According to the present invention, there is provided an apparatus for providing a cut length of sheet material to be wrapped around a cylindrical drum and held thereon, which comprises a knife-edge support for receiving a knife-edge of a cutter for the sheet material, sheet member holding means provided in said knife-edge support for detachably securing an end portion of said sheet member on said knife-edge support and knife-edge support moving means for moving said knife-edge support tangentially with respect to said drum in synchrony with rotation of said drum for transfer of said material to the drum to take place on release of said material from the knife-edge support.

In operation of the apparatus of the invention, owing to the fact that an end portion of a cut sheet member is held on the knife edge support by the sheet member holding means, it can be moved to the cylindrical drum while so held jointly with the knife-edge support by the knife-edge support moving means. As a result, the leading and trailing cut end edges of the sheet material being transferred to the drum are kept straight and parallel and hence there is no variation in the length of the cut sheet member across the width thereof. The desired quality of joint between the cut edges can thereby be assured.

For a better understanding of the invention and to show how the same can be carried into effect reference will now be made, by way of example only, to the accompanying drawings, wherein:
Figure 1 is a schematic view showing the general construction of a sheet member handling apparatus according to one preferred embodiment of the present invention; and
Figures 2a to 2f are schematic views showing successive steps in the operation of the apparatus shown in Figures 1;

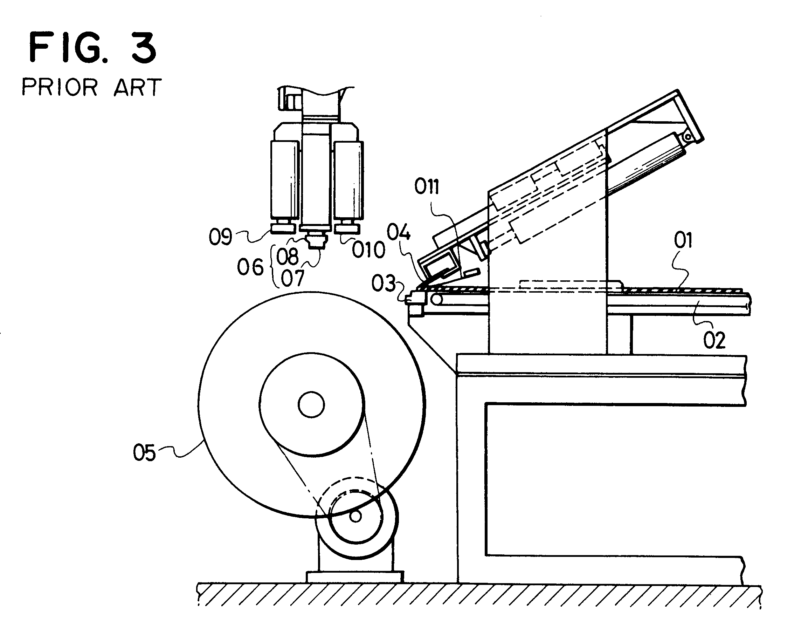

Figure 3 is a schematic view showing the construction of a sheet member handling apparatus in the prior art and has already been described herein.

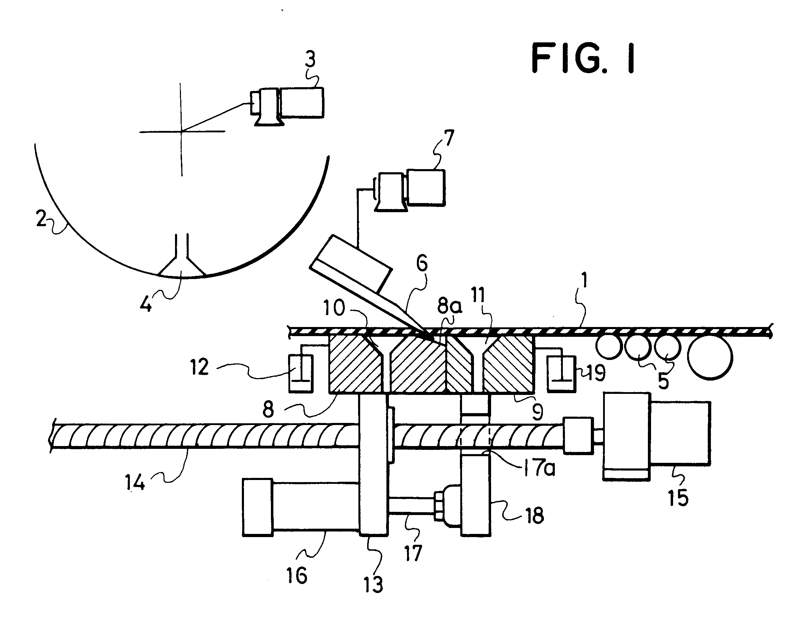

Referring to Figure 1 which schematically shows the general construction of an entire apparatus for handling a sheet member 1 according to one preferred embodiment of the present invention whereby sheet material is cut and adhered to a drum, reference numeral 2 denotes a cylindrical drum, which is rotationally driven by a drum drive motor 3 capable of being controlled synchronously.

Suction cups 4 are disposed on the cylindrical surface of the drum 2 at predetermined positions in a line parallel to the axis of rotation of the drum. The cups 4 provide locations at which an end portion of a sheet member 1 can be held on the circumferential surface by suction.

On the other hand, beyond a roller conveyor 5 for conveying a continuous sheet member 1, in the direction of travel of the latter, there are disposed front and rear countersupports 8 and 9 which serve as knife-edge supporting members for a cutter 6 and which can be free separated and brought close.

The countersupports 8 and 9 are both formed in a laterally elongated rectangular parallelepiped shaped directed in the transverse direction, and they abut so as to form a single knife-edge bearer with the rear surface of the front countersupport 8 held in contact with the front surface of the rear countersupport 9.

The rear part of the top surface of the upper surface of the front side countersupport 8 is obliquely notched, and the knife-edge of the cutter 6 travels in the lateral direction along the inclined surface 8a of this notch to cut the sheet member 1. It is to be noted that the cutter 6 is driven by a cutter traversing motor 7.

On the upper surfaces of both the front and rear countersupports 8 and 9 are provided suction cups 10 and 11, respectively, lying in a row extending transversely of the sheet member 1 and whereby portions of the sheet member 1 to the front and rear of the cutting position thereof can be held by suction, and the end portion of the sheet member 1 can be held in position after cutting.

The front countersupport 8 itself is supported by a movable support table 13 so as to be freely raised and lowered by a lifting cylinder 12, and a screw shaft 14 passes through a central portion of the moving support table 13 with which it is in threaded engagement.

The screw shaft 14 is rotated by a countersupport moving motor 15. As a result of drive of the countersupport moving motor 15, the movable support table 13 threadedly engaged with the screw shaft 14 can be moved back and forth carrying the front countersupport 8 with it.

The movable support table 13 also carries a countersupport separating cylinder 16. A separating support table 18 is fixedly secured to the remote end of a piston rod 17 projecting rearwardly from the same separating cylinder 16. The afore-mentioned rear countersupport 9 is supported by the separating support table 18, being capable of being freely raised and lowered by means of a lifting cylinder 19.

It is to be noted that the piston rod 17 travels parallel to the screw shaft 14, and that the screw shaft 14 passes through a circular bore 17a through the separating support table 18.

Accordingly, the separating support table 18 for the rear countersupport 9 is connected to the movable support table 13 via the separating cylinder 16 and hence moves back and forth jointly with the front countersupport 8 as the latter is driven by the countersupport moving motor 15 and screw shaft 14. The separating support table 18 can also be moved to the front countersupport 8 when the latter is driven by the separating cylinder 16, and the rear countersupport 9 can be brought into contact with the front countersupport 8 while being kept in contact with the latter or can be separated from the front countersupport 8.

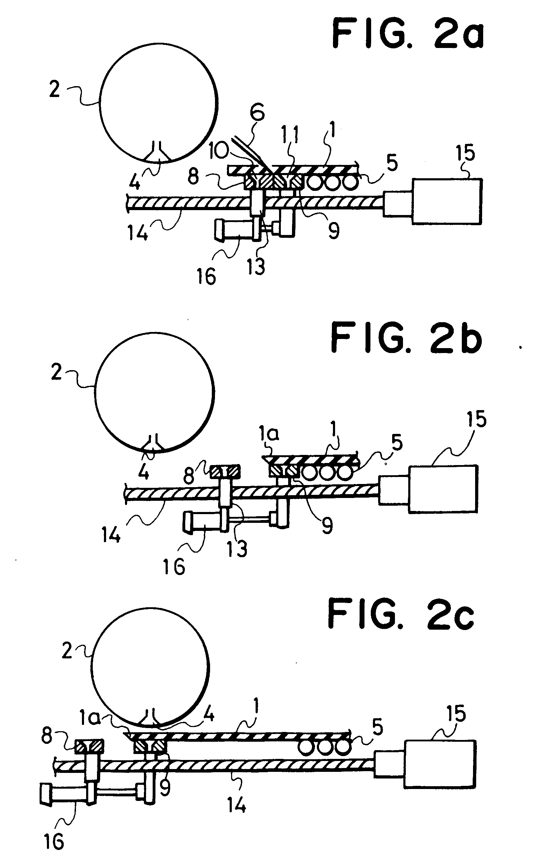

The sheet member sticking apparatus shown in Figure 1 is operated according to the sequence of steps illustrated in Figures 2a to 2f.

Initially, a sheet member 1 is conveyed by the roller conveyor 5 up to a predetermined position in front of the roller conveyor 5 where the front countersupport 8 and the rear countersupport 9 are positioned in contact with each other. The roller conveyor 5 stops when the front end of the sheet member 1 has reached a position over both the countersupports 8 and 9, and a portion of the sheet member 1 adjacent the front end is held under suction by suction cups 10 and 11.

Then, the cutter 6 travels over the portion of sheet member 1 between the respective suction positions on countersupports 8 and 9 to cut away a part of the front end of the sheet member and to provide a cut edge having a desired configuration (See Figure 2a). During the above-mentioned operation, the drum 2 is positioned in such manner that the suction cups 4 are positioned along the bottom of drum 2.

After the front end portion of the sheet member 1 has been cut away, the movable support table 13 is advanced and also the front countersupport 8 is separated from the rear side countersupport 9 by simultaneously driving the countersupport moving motor 15 and the separating cylinder 16 (See Figure 2b). With the counter-supports 8 and 9 thus separated, they advance together driven by the screw shaft 14, and the rear countersupport 9 is positioned right under the drum 2 (See Figure 2c).

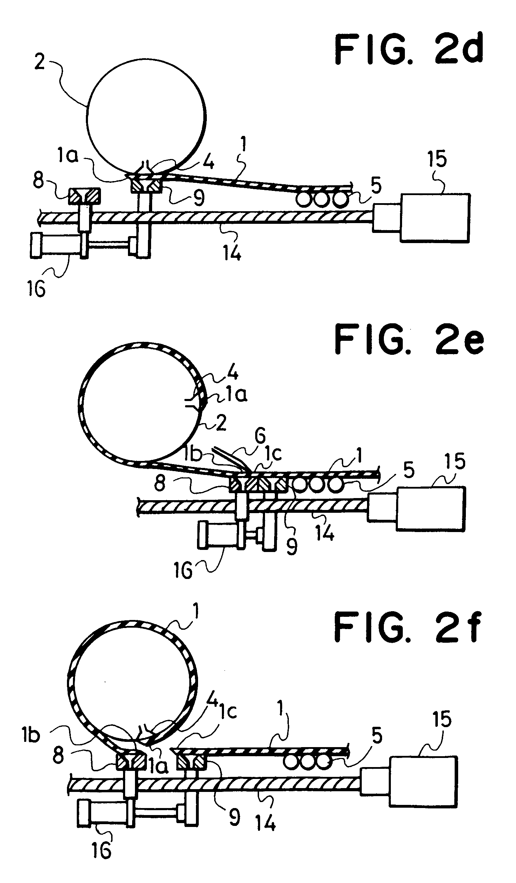

During this operation, the rear countersupport 9 is holding the cut front end portion 1a of the sheet member 1 under suction by means of the suction cups 11, and, while holding the cut front end portion 1a under suction, the rear countersupport 9 is now raised by actuating the lifting cylinder 19 and, as a result, the front end portion 1a of the sheet member 1 is brought into contact with the lowermost portion of the cylindrical surface of the drum 2 (see Figure 2d).

At the lowermost portion of the cylindrical surface of the drum 2 is positioned a suction cap 4 to hold the front end portion 1a of the sheet member 1 under suction, and at the same time the holding of the front end portion under suction by the suction cups 11 in the rear countersupport 9 is stopped.

The drum 2 is rotated, driven by the drum drive motor while the front end portion of the sheet member 1 is held under suction thereon and the sheet member 1 is wrapped around the drum 2. At the same time, the front countersupport 8 and the rear countersupport 9 return to their original positions and are joined together.

When the drum 2 has rotated a predetermined amount and has stopped, the suction cups 10 and 11 in the front countersupport 8 and in the rear countersupport 9, respectively, will again be holding the sheet member 1 under suction, and the cutter 6 will traverse and cut the portion of the sheet member between front and rear fixed positions (see Figure 2e).

Then the drum drive motor 3 and the countersupport moving motor 15 are actuated to operate in synchrony and as a result, the screw shaft 14 is rotated so that the front countersupport 8 may be advanced at linear velocity equal to the circumferential velocity of the drum 2.

Because of this equalisation of velocities and the simultaneous application of suction to the rear end portion 1b of the sheet member 1 as it approaches the drum 1, causing it to be drawn towards the drum and wrapped therearound, the rear end region of the sheet member 1 can be wrapped around the drum 2 without being stretched or contracted in any direction.

During this movement of the front countersupport 8, the separating cylinder 16 is driven, and the rear countersupport 9 is separated from the front countersupport 8.

The drum 2 is then stopped when the rear end portion 1b of the sheet member 1 is still held under suction by the front countersupport 8 which is then positioned right under the drum 2, and the front end portion 1a of the sheet member 1 is present at a position close to the lowermost portion of the drum 2. Meanwhile, the next front end portion 1c of the sheet member 1 is positioned close to the rear end 1b of the preceding sheet member 1 because it was separated while being advanced together with the rear end 1b of the sheet member 1 while being held under suction by the rear countersupport 9 (see Figure 2f).

The front countersupport 8 is now lifted by driving the lifting cylinder 12. As a result, the rear end portion 1b of the sheet member 1 is pressed against the drum 2, and the cut edge of the front end portion 1a and the cut edge of the rear end portion 1b are joined together on the drum.

In this way, one operating cycle is completed. The next cycle begins with the exposure of the front end portion of a sheet member 1 shown in Figure 2b, and the above-described sequence of steps is then repeated for the next operating cycle.

In the illustrated embodiment of the present invention, owing to the fact that a front end portion and a rear end portion of a sheet member 1 are held on the countersupports 8 and 9 under suction and cutting takes place between the holding positions by means of the cutter 6, precise cutting can be achieved. Moreover, because of the fact that the cut end edges of the sheet material are moved while being themselves held by suction on the countersupports 8 and 9, respectively, and are held on the drum 2 by suction, the cut end edges can be maintained straight and similar and there is no variation in the length of the cut sheet members 1 at different positions thereacross.

Since joining of the front end and the rear end of the cut sheet member 1 is effected without deformation of the cut end edges of the end portions, joining precision is good.

Owing to the fact that the countersupports 8 and 9 serve as knife-edge support and also as grippers for holding the end portions of the sheet member 1 under suction while they are being moved by incorporating suction cups 10 and 11 therein, the constructions of the apparatus can be simplified by reducing the number of component parts and also productivity can be enhanced by reducing the time involved in sticking lengths of sheet material to a drum.

While provision has been made in the illustrated embodiment for the end portions of the sheet material to be held under suction by suction cups provided in the countersupports, if the sheet member has steel cords embedded therein, it is possible to provide electromagnets in the countersupports for holding the end portions of the sheet member under the magnetic forces applied, as appropriate, by the electromagnets, the end portions being released on demagnetizing the electromagnets.

## Claims

1. An apparatus for providing a cut length of sheet material (1) to be wrapped around a cylindrical drum (2) and held thereon, which comprises a knife-edge support (8,9) for receiving a knife-edge of a cutter (6) for the sheet material, sheet member holding means (10,11) provided in said knife-edge support (8,9) for detachably securing an end portion (1a, 1b, 1c) of said sheet member on said knife-edge support (8,9), and knife-edge support moving means (14,15) for moving said knife-edge support (8,9) tangentially with respect to said drum in synchrony with rotation of said drum for transfer of said material to the drum to take place on release of said material from the knife-edge support (8,9).

2. An apparatus as claimed in Claim 1, which comprises a front knife-edge support (8) and a rear knife-edge support (9) disposed so as to be separable from each other and to be able to be brought close to each other.

3. An apparatus as claimed in Claim 2, wherein said rear knife-edge support (9) is connected to said front knife-edge support (8) via an extendible/contractible connecting member (16, 17), and said front knife-edge support (8) is displaceable with respect to said rear knife-edge support (9) by said knife-edge support moving means (14,15).

4. An apparatus as claimed in any preceding claim, wherein said knife-edge support (8,9) has associated means for effecting lifting and lowering thereof.

5. An apparatus as claimed in Claim 2 or 3, wherein said front and rear knife-edge support (8) and (9) have associated means (12) and (19) respectively for effecting lifting and lowering thereof.

6. An apparatus as claimed in any preceding claim, wherein said sheet member holding means comprises suction cup means (10,11) therein.

7. An apparatus as claimed in any one of Claims 1 to 5, wherein said sheet member holding means comprises electromagnetic attracting means.

8. An apparatus as claimed in Claim 6 or 7, when appended to Claim 2, 3 or 5, wherein each knife-edge support (8;9) has a sheet member holding means (10;11) therein.

9. An apparatus as claimed in any preceding claim, wherein said knife-edge support moving means comprises a screw shaft (14) passing through an opening in a support table (13) supporting said knife-edge bearer (8,9) and at which it is in screw-threaded engagement with the support table (13) and a motor (15) for imparting rotary drive to said screw shaft (14).

10. An apparatus as claimed in Claims 3 and 9, wherein said connecting member comprises a cylinder (16) secured to said support table (13) and a piston rod (17) extending rearwardly from said cylinder and connected to said rear knife-edge support (9).

11. An apparatus as claimed in any preceding claims, which is in association with a said drum (2) positioned with its longitudinal axis above and at right angles to said knife-edge support moving means (14, 15) and having drive means (3) for rotating at a circumferential velocity equal to the linear velocity imparted to said sheet material (1) by the knife-edge support moving means, (14,15).

12. An apparatus as claimed in Claim 11, wherein the drum (2) includes sheet member holding means (4), for detachably securing a leading end (1a) of the sheet material to (1) to the drum (2) and holding it thereon as the drum is rotated.
